# FASCICULE DE BREVET EUROPEEN

(11) **EP 2 408 666 B1**
(45) Date de publication et mention de la délivrance du brevet: **25.02.2015**
(21) Numéro de dépôt: 10716389.1
(22) Date de dépôt: 15.03.2010
(51) Int. Cl.: B64C 1/12, B64C 1/06

(54) **RAIDISSEURS SOUS BAVETTE POUR AÉRONEF**
UNTERKLAPPENVERSTEIFER FÜR EIN LUFTFAHRZEUG
UNDER-FLAP STIFFENER FOR AIRCRAFT

(30) Priorité: 19.03.2009 FR 0951761
(43) Date de publication de la demande: 25.01.2012
(73) Titulaire: Airbus Operations (S.A.S.), 31060 Toulouse (FR)
(72) Inventeur: LIEVEN, Patrick, 31620 Fronton (FR); CHAVONET, Eric, 31770 Colomiers (FR); BELLET, Daniel, 31470 Saint-Lys (FR)
(74) Mandataire: Gicquel, Olivier Yves Gérard
(86) Numéro de dépôt international: PCT/FR2010/050449
(87) Numéro de publication internationale: WO 2010/106271

(56) Documents cités:
- FR-A- 2 898 105
- US-A1- 2007 095 982
- US-A1- 2007 164 152
- US-A1- 2008 149 769

## Description

L'invention relève du domaine des structures de fuselage d'aéronefs.

Les aéronefs, et par exemple les avions commerciaux de type jets, comportent une part importante de leurs équipements critiques au niveau du cockpit situé dans le nez de l'avion. Pendant les phases de montée et de descente, le danger d'impact de la partie frontale de l'avion avec des oiseaux est très important. En effet, la masse des oiseaux, combinée avec la vitesse relative de l'avion par rapport à ces oiseaux se traduit par une énergie cinétique considérable à l'impact, qui se transforme en énergie de déformation mécanique.

Vis à vis de ces chocs éventuels, il est nécessaire de protéger le mieux possible les équipements avion, disposés pour ce qui concerne l'électronique de commande dans la partie avant de l'avion, et donc directement derrière les points d'impact les plus probables, et naturellement l'équipage.

En dehors d'un impact direct sur le pare-brise, qui est dimensionnant pour le calcul d'épaisseur et de résistance du pare-brise, un impact au dessus de celui-ci, dans la partie appelée casquette de l'avion, risque de mettre en danger les équipements de génération électrique, tandis que un impact sous le pare-brise, dans la partie appelée bavette de l'avion, met en danger les écrans de contrôle et l'équipage.

Le fuselage est supporté par un ensemble structurel de cadres et de raidisseurs, destinés à reprendre tous les efforts mécaniques normaux du vol. Un sous-dimensionnement des raidisseurs structurels du fuselage peut se traduire par la traversée du fuselage par au moins une partie de la masse de l'oiseau et la destruction des équipements concernés, mettant en danger l'ensemble de l'avion.

Ce danger est plus ou moins grand selon les avions. En effet, l'angle relatif du fuselage par rapport à l'axe longitudinal de déplacement de l'avion varie de 20 à 35° typiquement. Plus cet angle est grand, plus l'énergie est dispersée sur une surface faible du fuselage.

La demande de brevet des Etats-Unis publiée sous la référence US 2008/149769 décrit des éléments de parois de fuselage, présentant une structure déformable, pouvant être disposés aux endroits du fuselage susceptibles d'entrer en collision avec des objets volants ou des projectiles, ces éléments de parois présentant une structure les rendant capables de supporter en se déformant l'énergie d'impact transmise au fuselage au moment du choc. Selon l'enseignement dispensé dans ce document la mise en place de tels éléments de parois sans renforts additionnels se substitue à la mise en place d'éléments de parois associés à des renforts rigides spécialement conçus et positionnés pour résister aux chocs. Le principe consiste à absorber, en cas d'impact, l'énergie transmise par l'objet percuté et non à tenter de résister sans déformation au choc de la collision.

La présente invention a quant à elle pour objet, en conservant des structures de fuselage conventionnels formées de paroi renforcées par des raidisseurs, de mieux prendre en compte les chocs éventuels avec des oiseaux dans les phases de vol, tout en limitant la masse des raidisseurs structurels.

A cet effet, l'invention vise en premier lieu, un ensemble comportant une surface de fuselage et une pluralité de raidisseurs structurels longitudinaux, lesdits raidisseurs, du type comportant un plan principal de résistance à la flexion, sensiblement perpendiculaire à la surface de fuselage, étant disposés sous une partie de ladite surface et solidarisés à elle le long d'une ligne de reprise d'effort,
cet ensemble étant tel que pour plusieurs desdits raidisseurs, le plan principal de résistance à la flexion du raidisseur se confond sensiblement, en au moins un certain nombre de points Pᵢ de sa ligne de reprise d'effort à la surface, avec le plan XpᵢNᵢ déterminé par la normale locale Ni à la surface et à un axe d'impact X_{Pi} préalablement connu.

Plus précisément, l'invention vise le cas particulier de l'aéronautique et un ensemble de raidisseurs tel que la surface soit une partie du fuselage d'un aéronef dite bavette, venant dans le prolongement du nez de l'aéronef jusqu'au pied d'un pare-brise, et en ce que en tout point l'axe d'impact X_{Pi} soit un même axe de déplacement de l'aéronef en vol.

On comprend qu'en un point donné du raidisseur, ce plan principal de résistance à la flexion se confond avec le plan du rebond d'un objet venant percuter le fuselage au même point selon l'axe de déplacement de l'avion lors des phases de décollage ou d'atterrissage (qui n'est pas celui de la phase de vol horizontal stabilisé). On a donc ici placé un renfort de telle sorte que son plan de résistance maximale à la flexion se confonde avec le plan subissant la contrainte maximale en cas de choc, ce qui correspond bien au but recherché.

Selon un mode avantageux de réalisation, la section des raidisseurs est de type en "I" comportant une âme et deux membrures aux extrémités de ladite âme, et perpendiculaires à celle-ci.

L'invention vise en second lieu une bavette pour aéronef, adaptée à être disposée entre le nez et le pare-brise dudit aéronef, comprenant un ensemble de raidisseurs tels que définis ci-dessus.

De même, l'invention vise en troisième lieu un aéronef, comportant un fuselage présentant une surface externe,
comportant une pluralité de raidisseurs structurels longitudinaux, du type comportant une âme formant plan principal de résistance à la flexion, sensiblement perpendiculaire à la surface de fuselage, lesdits raidisseurs étant disposés sous une partie de ladite surface et solidarisés à elle le long d'une ligne de reprise d'effort,
et tel que pour plusieurs desdits raidisseurs, le plan tangent de l'âme du raidisseur se confond sensiblement, en au moins un certain nombre de points Pᵢ de sa ligne de reprise d'effort au fuselage, avec le plan XNᵢ déterminé par la normale locale Ni à la surface du fuselage et l'axe longitudinal X de l'aéronef.

L'invention vise également un procédé de calcul pour une surface gauche (5) quelconque connue destinée à être renforcée par une pluralité de raidisseurs longitudinaux, d'une suite de points Pᵢ et de normales Ni définissant une ligne de reprise d'effort pour un raidisseur (7), pour un ensemble d'axes d'impact X_{Pi} correspondant chacun à un point Pᵢ de la surface,
le procédé comportant des étapes suivantes :
- choix d'un point de contact initial P1 sur la surface gauche,
   puis de façon itérative,
- pour chaque point Pᵢ (i>=1) donné, calcul en ce point Pᵢ de la direction normale locale Ni à la surface,
- calcul de la courbe Ci, intersection du plan XpᵢNᵢ déterminé par l'axe d'impact Xpᵢ et la normale Ni avec la surface du fuselage au point Pᵢ
- calcul des coordonnées du point Pᵢ₊₁ sur cette courbe Ci, à une distance D prédéfinie de Pi.

Ce procédé permet d'établir par tout moyen de calcul la géométrie d'un ensemble de formes déterminées par leur ligne de contact avec la surface et leur plan normal à cette surface, selon une contrainte qui est ici celle de reprise des efforts de rebond d'un élément arrivant selon un axe d'impact local X_{Pi}

Selon un mode particulier correspondant à un procédé de calcul simplifié, en tout point l'axe d'impact X_{Pi} est un même axe longitudinal X.

Cette disposition évite la prise en compte des aspects locaux du flux d'air autour de la surface, en approximant la direction d'impact en chaque point avec l'axe de déplacement de l'avion.

L'invention vise également un logiciel adapté à mettre en oeuvre le procédé tel qu'exposé.

Pour le cas de réalisation en composites, l'invention vise encore une bavette réalisée en matériau composite, du type comportant au moins deux nappes de fibres principales noyées dans une résine, la bavette étant telle que la direction préférentielle d'une des nappes de fibres en chaque point de la bavette, dite nappe en éventail, est déterminée en utilisant un procédé de calcul exposé plus haut.

Avantageusement, dans ce cas, l'épaisseur de la nappe de fibres en éventail en chaque point est déterminée en utilisant un procédé prenant en compte la force d'impact en chaque point.

On comprend que ces dispositions permettent de généraliser l'invention aux cas de réalisation pour lesquels les raidisseurs sont au moins partiellement intégrés à la bavette elle-même.

Les buts et avantages de l'invention seront mieux compris à la lecture de la description et des dessins d'un mode particulier de réalisation, donné à titre d'exemple non limitatif, et pour lequel les dessins représentent :
- Figure 1 : vue de côté du fuselage d'un aéronef ;
- Figure 2 : vue en écorché du fuselage au niveau de la bavette et du pare-brise avion;
- Figure 3 : vue de face de la structure du fuselage,
- Figure 4 : section droite d'un raidisseur classique,
- Figure 5 : vue schématique d'une portion de fuselage et d'un raidisseur.

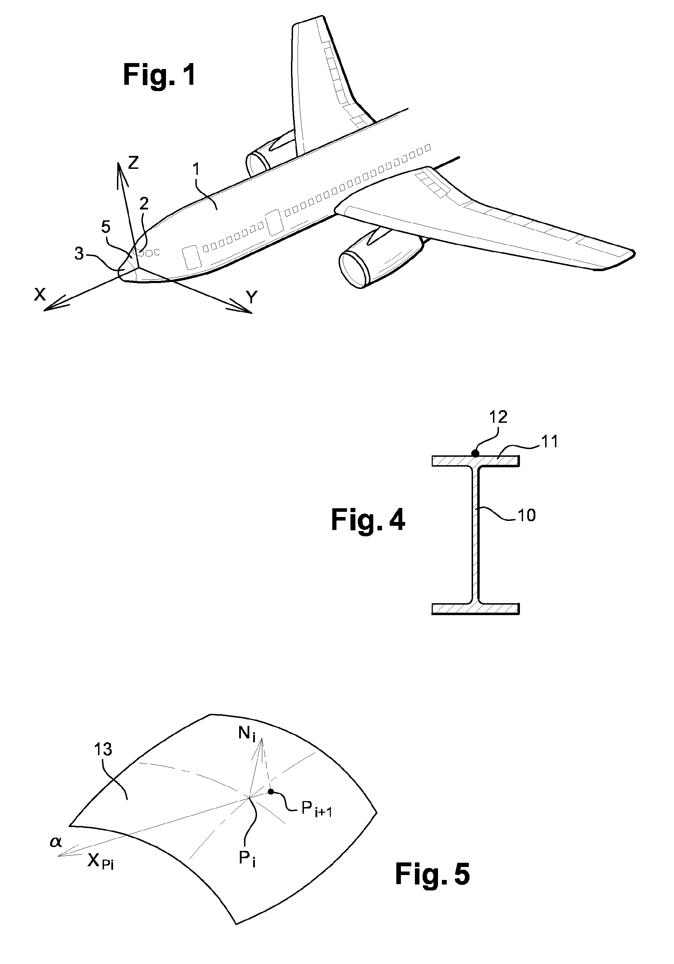

L'invention trouve sa place dans la partie avant d'un fuselage d'avion 1 vu de côté sur la figure 1, ce fuselage principalement longitudinal comportant un pare-brise 2, en léger retrait par rapport au nez de l'avion 3.

Pour la suite de la description, on définit comme axe longitudinal X le sens de déplacement normal de l'aéronef, les termes avant et arrière étant également utilisés en fonction de ce sens de déplacement normal. L'axe longitudinal X forme avec un axe transversal Y un plan normalement horizontal au cours du vol. On nomme axe vertical un axe Z qui complète avec les axes longitudinal et transversal un repère orthogonal et on utilise les termes supérieur et inférieur par rapport à cet axe vertical orienté vers le haut de l'avion en position de vol normal. On note que le plan vertical XZ est généralement un plan de symétrie de l'avion.

Un partie de fuselage en double courbure nommée bavette 5 vient créer une transition de forme entre le nez de l'avion 3, le pare-brise 2, et plus généralement la cabine de l'appareil.

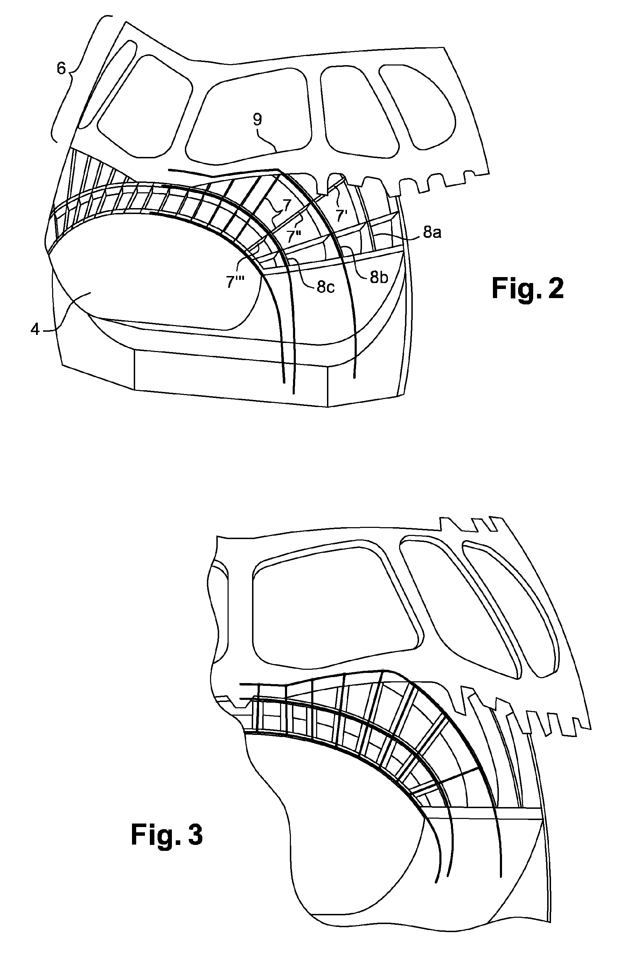

La figure 2 montre, toujours en vue de côté, la structure de la carlingue de l'avion au niveau de son cockpit. Cette figure est limitée à la structure 6 du pare-brise 2 de l'avion, et à la structure de la bavette 5. La partie formée par le nez de l'avion 3, qui contient entre autres un radar, est dotée d'une structure particulière et sort du cadre de la présente invention. La transition entre ce nez de l'avion 3 et la cabine de l'avion est matérialisée par un fond étanche 4 formant bouclier, solidaire de la structure de la bavette 5.

De la même manière, la structure 6 du pare-brise 2 de l'avion constitue un ensemble structural spécifique, répondant à des normes et contraintes particulières, et qui sort du cadre de la présente invention.

On peut cependant noter que cette structure 6 du pare-brise comporte de façon connue, en partie inférieure, globalement au pied des vitrages formant le pare-brise 2, des éléments structuraux 9 de forme non détaillée ici et permettant la fixation de raidisseurs 7 et de cadres 8.

La partie supérieure de la structure de la bavette 5, qui nous concerne plus particulièrement dans la présente invention, comprend en effet d'abord plusieurs cadres 8 principalement transversaux, le fond étanche 4 formant un cas particulier de cadre. Chacun de ces cadres 8 présente une symétrie par rapport au plan de symétrie vertical XZ. Dans le présent exemple non limitatif, la structure de la bavette 5 comporte, outre le fond étanche 4, trois cadres transversaux 8a, 8b, 8c.

La partie supérieure de la structure de la bavette 5 comprend par ailleurs un ensemble de raidisseurs 7 principalement longitudinaux qui forment une grille avec les cadres 8. Chaque raidisseur 7 est composé de plusieurs segments 7', 7", 7"', disposés sensiblement dans le prolongement les uns des autres, et solidarisés chacun à un cadre 8 à chacune de leurs extrémités.

Les départs des raidisseurs 7 sont espacés de façon régulière le long du cadre 4, ces raidisseurs 7 sont par exemple au nombre d'une demi-douzaine de chaque côté du plan de symétrie vertical XZ de l'avion.

Ces cadres 8 et ces raidisseurs 7 sont des éléments dont la fonction est structurelle. Leur section, de type connu, et par exemple en "I" comme illustré sur la figure 3 et détaillé figure 4, comporte une âme 10 et deux membrures 11 aux extrémités de ladite âme, et perpendiculaires à celle-ci.

La forme exacte, le matériau et les modes de fixation des cadres et raidisseurs entre eux et sur le reste de la structure avion sont de type connu en soi, et sortent du cadre de la présente invention.

La "peau" 13 du fuselage est solidarisée sur les raidisseurs 7 et les cadres 8 par des moyens connus qui sortent du cadre de l'invention, et par exemple par rivetage sur les membrures 11 des raidisseurs 7 et des cadres 8. On note que la ligne de contact 12 entre l'âme 10 du raidisseur 7 et sa membrure supérieure 11 constitue également la ligne de reprise des efforts du fuselage par le raidisseur 7.

De manière à reprendre au mieux les efforts induits à l'impact appliqués sur le fuselage au cours du vol, les raidisseurs 7 ont leurs âmes 10 orientées sensiblement perpendiculairement au plan local du fuselage, comme on le voit sur la figure 2. Les cadres 8 assurent la tenue du fuselage à la pressurisation (plan d'âme parallèle à un plan XZ)

Les raidisseurs 7 sont classiquement de forme linéaire, par simplicité de production.

Dans la présente invention, chaque raidisseur 7 (ou segment de raidisseur) voit sa forme différenciée selon l'endroit du fuselage sous lequel il est placé.

En effet, pour au moins un certains nombre de raidisseurs 7, le plan tangent local de l'âme 10 du raidisseur 7 (qui est aussi le plan principal de résistance à la flexion) se confond, en au moins un certain nombre de points de la ligne de contact 12 (et préférentiellement la totalité), avec le plan défini par l'axe longitudinal X et la normale N locale au fuselage (qui est le plan de reflet optique d'un rayon arrivant selon l'axe longitudinal de l'avion).

Ceci signifie que l'effort de rebond d'un oiseau venant frapper le fuselage selon l'axe longitudinal de vol de l'avion est exactement situé dans le plan de l'âme du raidisseur en ce point. Cette disposition est celle qui maximise l'effort de flexion que peut subit le raidisseur 7, et donc minimise la probabilité de traversée du fuselage par l'oiseau.

La géométrie des raidisseurs 7 dépend donc de la forme du fuselage au niveau de la bavette 5.

La détermination de la forme d'un raidisseur 7 se fait par itérations, selon un procédé mis en oeuvre de façon automatique, par exemple par un logiciel utilisant en entrée la forme de la surface du fuselage au niveau de la bavette 5 de l'avion.

Le principe de construction est illustré par la figure 5.

Dans ce mode de conception de raidisseur décrit ici à titre nullement limitatif, le procédé débute le calcul d'un raidisseur 7 à partir de son point P1 de contact avec la peau 13 du fuselage, au niveau du pourtour du fond étanche 4, ce point de contact P1 étant préalablement choisi ou étant fonction d'autres contraintes de l'avion. Dans l'exemple illustré figure 3, on a choisi une disposition comportant 8 raidisseurs régulièrement espacés de chaque côté du plan de symétrie vertical XZ de l'avion.

Pour un point Pᵢ donné, on calcule en ce point Pᵢ la direction normale locale Ni à la surface du fuselage, cette surface étant totalement connue et mémorisée au préalable.

L'axe longitudinal X et la normale Ni déterminent alors un plan XNᵢ, dont l'intersection avec la surface du fuselage au point Pᵢ donne une courbe Ci (qu'on peut approximer au voisinage du point Pᵢ par une droite). On calcule alors les coordonnées d'un point Pᵢ₊₁ sur cette courbe Ci, à une distance D prédéfinie de Pᵢ, par exemple 100 mm dans le présent exemple.

On comprend qu'ainsi à partir du point P₁ on détermine un point P₂, puis on recommence l'opération au point P₂, qui donne un point P₃ etc. jusqu'à atteindre par itérations successives le cadre 8a le plus éloigné du fond étanche 4.

La suite de points Pᵢ et des normales associées Ni définit alors complètement la forme de l'âme du raidisseur 7 partant du point P1 au niveau du fond étanche. Ce raidisseur peut être formé éventuellement de plusieurs segments sans modification du principe de construction.

On obtient alors un ensemble de raidisseurs 7 disposés en éventail à partir du fond étanche 4. Par rapport à un ensemble de raidisseurs disposés de façon "traditionnelle" (illustré figure 2), on constate un écart angulaire de plus en plus grand par rapport à l'axe longitudinal X de l'avion, particulièrement perceptible sur les raidisseurs 7 les plus latéraux.

Il est clair qu'on a choisit de débuter le calcul à partir du fond étanche 4 de l'avion, mais que tout point initial arbitraire sur la surface de la bavette 5 peut être choisi sans modification du procédé.

La portée de la présente invention ne se limite pas aux détails des formes de réalisation ci-dessus considérées à titre d'exemple, mais s'étend au contraire aux modifications à la portée de l'homme de l'art.

Dans une variante, la structure de la bavette 5 est réalisée sous la forme d'une pièce monobloc comportant des renforts structurels intégrés, orientés conformément à la description précédente. Ces éléments structurels remplissent alors la même fonction de reprise optimisée des efforts en cas de choc d'un oiseau.

A défaut d'utiliser des raidisseurs 7 de forme idéale, ce qui oblige à les définir et fabriquer un par un, il est possible en variante d'utiliser des segments 7', 7", 7"' linéaires de raidisseur, et de fixer ceux-ci aux cadres 8 en les orientant chacun selon la direction qui serait tangente au raidisseur 7 à mi distance entre deux cadres 8, selon la description donnée plus haut.

On a alors un raidisseur 7 disposé sous forme d'arc et constitué de plusieurs segments linéaires.

Cette variante simplifie la mise en oeuvre de l'invention, tout en en conservant principalement les vertus, surtout si les cadres 8 sont proches les uns des autres.

La description qui a été faite a utilisé par simplification le même axe longitudinal pour définir la direction d'impact d'un oiseau sur le fuselage.

Dans les faits, cet axe varie selon les points de la bavette, du fait de l'écoulement de l'air autour de celle-ci, ce qui peut substantiellement modifier la direction d'impact aux vitesses considérées. La forme des raidisseurs 7 devrait donc idéalement prendre en compte cette direction d'impact pour garantir une reprise d'effort optimale.

Ceci revient à dire que en chaque point Pᵢ de la surface, l'axe d'impact X_{Pi} fonction du point Pᵢ n'est pas nécessairement un même axe longitudinal X.

Dans ce cas, le procédé de calcul est simplement modifié pour prendre en compte en chaque point l'axe d'impact X_{Pi}

Les données d'axe local d'impact peuvent par exemple être tirées de calculs aérodynamiques d'écoulement autour du nez de l'appareil, adaptés pour le calcul de trajectoire d'un objet ayant les caractéristiques aérodynamiques d'un oiseau, et être mémorisées dans une base de données comprenant pour chaque point Pᵢ de la surface de la bavette 5 les coordonnées du vecteur direction d'impact X_{Pi} associé.

Jusqu'ici dans la description, on a tenu compte de la direction de l'impact, mais non de la force de l'impact. Or il est possible de calculer pour chaque point Pᵢ une force relative d'impact Fᵢ en ce point Pᵢ (pour un objet de poids et de forme normalisés, par exemple ponctuel de 1 kg reçu selon l'axe sensiblement longitudinal X_{Pi} à une vitesse de 400 km/h) et sa composante normale F_{Ni} et, partant, proposer une épaisseur de l'âme 10 du raidisseur 7 en ce point Pᵢ, ou, plus généralement la valeur d'un paramètre géométrique du raidisseur 7 permettant la reprise de cette composante normale F_{Ni} et donc, par exemple, proportionnel à cette composante F_{Ni}.

Dans le cas d'une bavette réalisée en matériau composite du type comportant au moins deux directions de fibres principales noyées dans une résine, le procédé de calcul de forme de raidisseurs permet également la détermination de la direction préférentielle d'une nappe de fibres en chaque point de la bavette, ces fibres constituant par elles-mêmes des raidisseurs de la surface. Ces fibres vont alors être disposées en éventail à partir du fond étanche de l'avion.

Dans ce cas, le calcul qui vient d'être exposé en fonction de la force d'impact en chaque point permet de proposer une épaisseur de cette nappe de fibres en éventail et donc l'épaisseur locale de la bavette en chaque point.

La description a été donnée pour le cas d'un aéronef soumis à un éventuel choc d'oiseau et encore plus particulièrement au cas de la bavette de l'avion. Elle s'applique également à également à un aéronef soumis à un épisode de grêle, en modifiant l'axe longitudinal d'impact du fait de la composante verticale de vitesse des grêlons. Dans le cas de bavette en matériau composites, plusieurs nappes de fibres en éventails peuvent être superposées, adaptée chacune à un type d'impact potentiel, et donc possédant des directions de fibres orientées différemment.

Elle peut cependant être généralisée à un corps soumis à un flux de particules, et par exemple un panneau solaire de forme gauche pour satellite ou véhicule spatial, soumis au flux de particules du vent solaire.

## Revendications

1. Ensemble comportant une surface de fuselage (5) et une pluralité de raidisseurs (7) structurels longitudinaux, lesdits raidisseurs, du type comportant un plan principal de résistance à la flexion (10), sensiblement perpendiculaire à la surface de fuselage (5), étant disposés sous une partie de ladite surface (5) et solidarisés à elle le long d'une ligne de reprise d'effort (12),**caractérisé en ce que** pour plusieurs desdits raidisseurs (7), le plan principal de résistance à la flexion (10) du raidisseur (7) se confond sensiblement, en au moins un certain nombre de points Pi de sa ligne de reprise d'effort (12) à la surface, avec le plan XpiNi déterminé par la normale locale Ni à la surface et un axe d'impact Xp, préalablement connu.

2. Ensemble selon la revendication 1, **caractérisé en ce que** ladite surface est une partie du fuselage d'un aéronef dite bavette (5), venant dans le prolongement du nez de l'aéronef (3) jusqu'au pied d'un pare-brise (2), et **en ce que** en tout point P; l'axe longitudinal Xpi est un même axe X de déplacement normal de l'aéronef en vol.

3. Ensemble selon l'une quelconque des revendications précédentes, **caractérisé en ce que** la section des raidisseurs est de type en "I" comportant une âme (10) et deux membrures (11) aux extrémités de ladite âme, et perpendiculaires à celle-ci.

4. Procédé de calcul, pour une surface gauche (5) quelconque selon la revendication 1 destinée à être renforcée par une pluralité de raidisseurs longitudinaux, d'une suite de points Pi et de normales Ni définissant une ligne de reprise d'effort pour un raidisseur (7), pour un ensemble d'axes d'impact Xpi correspondant chacun à un point Pi de la surface,**caractérisé en ce que** il comporte des étapes suivantes :
- choix d'un point de contact initial Pi sur la surface gauche (5) puis de façon itérative,
- pour chaque point Pi (i>=1) donné, calcul en ce point Pi de la direction normale locale Ni à la surface (5),
- calcul de la courbe Ci, intersection du plan XPi Ni déterminé par l'axe d'impact XPi et la normale Ni avec la surface du fuselage au point Pi
- calcul des coordonnées du point Pi+1 sur cette courbe Ci, à une distance D prédéfinie de Pi.

5. Procédé selon la revendication 4, **caractérisé en ce qu'**en tout point l'axe d'impact Xp, est un même axe longitudinal X.

6. Logiciel adapté à mettre en oeuvre le procédé selon l'une quelconque des revendications 4 à 5.

7. Ensemble selon une quelconque des revendications 1 et 2, formant une bavette pour aéronef adaptée à être disposée entre le nez (3) et le pare-brise (2) dudit aéronef, **caractérisée en ce que**, ladite bavette étant réalisée en matériau composite, du type comportant au moins deux nappes de fibres principales noyées dans une résine, la direction préférentielle d'une des nappes de fibres en chaque point de la bavette, dite nappe en éventail, est déterminée, en utilisant un procédé selon l'une quelconque des revendications 4 à 5, de façon à ce que les fibres forment les raidisseurs de la surface de la bavette.

## Patentansprüche

1. Anordnung aus einer Rumpffläche (5) und mehreren längs verlaufenden Strukturversteifern (7), wobei die Versteifer, des Typs, der eine Biegefestigkeits-Hauptebene (10) aufweist, die im Wesentlichen zu der Rumpffläche (5) senkrecht ist, unter einem Teil der Fläche (5) angeordnet sind und mit ihr entlang einer Linie der Kraftübernahme (12) fest verbunden sind, **dadurch gekennzeichnet, dass** für mehrere der Versteifer (7) die Biegefestigkeits-Hauptebene (10) des Versteifers (7) im Wesentlichen, in wenigstens einer gewissen Anzahl von Punkten Pi seiner Linie der Kraftübernahme (12) von der Fläche, mit der Ebene XpiNi zusammenfällt, die durch die lokale Normale Ni zu der Fläche und eine im Voraus bekannte Aufprallachse Xp bestimmt ist.

2. Anordnung nach Anspruch 1, **dadurch gekennzeichnet, dass** die Fläche ein als Abweiser (5) bezeichneter Teil des Rumpfes eines Luftfahrzeugs ist, der sich in der Verlängerung der Nase (3) des Luftfahrzeugs bis zum Fuß einer Windschutzscheibe (2) erstreckt, und dadurch, dass in jedem Punkt P die Längsachse Xpi ein und dieselbe normale Bewegungsachse X des Luftfahrzeugs während des Fluges ist.

3. Anordnung nach einem der vorhergehenden Ansprüche, **dadurch gekennzeichnet, dass** der Querschnitt der Versteifer die Form eines "I" hat, das einen Steg (10) und zwei zu diesem senkrechte Gurte (11) an den Enden des Stegs aufweist.

4. Verfahren zur Berechnung, für irgendeine linke Fläche (5) nach Anspruch 1, die dazu bestimmt ist, durch mehrere längs verlaufende Versteifer verstärkt zu werden, einer Folge von Punkten Pi und von Normalen Ni, die eine Linie der Kraftübernahme für einen Versteifer (7) definieren, für eine Gesamtheit von Aufprallachsen Xpi, die jeweils einem Punkt Pi der Fläche entsprechen, **dadurch gekennzeichnet, dass** es die folgenden Schritte aufweist:
- Wahl eines Anfangskontaktpunktes Pi auf der linken Fläche (5), danach, auf iterative Weise,
- für jeden gegebenen Punkt Pi (i>=1), Berechnung der Richtung der lokalen Normalen Ni zu der Fläche (5) in diesem Punkt Pi,
- Berechnung der Kurve Ci, welche die Schnittlinie der Ebene XPi Ni, die durch die Aufprallachse XPi und die Normale Ni bestimmt ist, mit der Fläche des Rumpfes ist, im Punkt Pi,
- Berechnung der Koordinaten des Punktes Pi+1 auf dieser Kurve Ci in einem vordefinierten Abstand D von Pi.

5. Verfahren nach Anspruch 4, **dadurch gekennzeichnet, dass** in jedem Punkt die Aufprallachse Xp ein und dieselbe Längsachse X ist.

6. Software, die dafür eingerichtet ist, das Verfahren nach einem der Ansprüche 4 bis 5 durchzuführen.

7. Anordnung nach einem der Ansprüche 1 und 2, welche einen Abweiser für ein Luftfahrzeug bildet, der dafür eingerichtet ist, zwischen der Nase (3) und der Windschutzscheibe (2) des Luftfahrzeugs angeordnet zu werden, **dadurch gekennzeichnet, dass**, wenn der Abweiser aus Verbundmaterial des Typs hergestellt ist, welcher mindestens zwei in ein Harz eingebettete Hauptfaserlagen aufweist, die bevorzugte Richtung einer der Faserlagen in jedem Punkt des Abweisers, die als fächerförmige Lage bezeichnet wird, unter Anwendung eines Verfahrens nach einem der Ansprüche 4 bis 5 bestimmt wird, derart, dass die Fasern die Versteifer der Oberfläche des Abweisers bilden.

## Claims

1. Assembly comprising a fuselage surface (5) and a plurality of longitudinal structural stiffeners (7), said stiffeners, of the type comprising a principal bending-resistant plane (10), substantially perpendicular to the fuselage surface (5), being arranged below a part of said surface (5) and secured thereto along a force take-up line (12), **characterized in that**, for several of said stiffeners (7), the principal bending-resistant plane (10) of the stiffener (7) substantially coincides, at at least a certain number of points Pi on its force take-up line (12) at the surface, with the plane XpiNi determined by the local normal Ni to the surface and an already-known impact axis Xp.

2. Assembly according to Claim 1, **characterized in that** said surface is a part of the fuselage of an aircraft called a flap (5) extending from the nose (3) of the aircraft to the base of a windscreen (2), and **in that** at any point P the longitudinal axis Xpi is one and the same axis X of normal movement of the aircraft in flight.

3. Assembly according to either one of the preceding claims, **characterized in that** the stiffeners have an I-shaped cross section comprising a web (10) and two flanges (11) at the ends of said web and perpendicular to the latter.

4. Method for calculating, for any warped surface (5) according to Claim 1 which is designed to be reinforced with a plurality of longitudinal stiffeners, a series of points Pi and normals Ni defining a force take-up line for a stiffener (7), for a set of impact axes Xpi, each corresponding to a point Pi of the surface, **characterized in that** it comprises the following steps:
- choosing an initial contact point Pi on the warped surface (5) and then, iteratively,
- for each given point Pi (it 1), calculating at that point Pi the local normal direction Ni to the surface (5),
- calculating the curve Ci, intersection of the plane XPi Ni determined by the impact axis XPi and the normal Ni with the surface of the fuselage at the point Pi,
- calculating the coordinates of the point Pi+1 on this curve Ci, at a predefined distance D from Pi.

5. Method according to Claim 4, **characterized in that** the impact axis Xp is, at all points, one and the same longitudinal axis X.

6. Software suited to carrying out the method according to either one of Claims 4 and 5.

7. Assembly according to either one of Claims 1 and 2, forming a flap for an aircraft, which flap is designed to be arranged between the nose (3) and the windscreen (2) of said aircraft, **characterized in that**, said flap being made from composite material, of the type comprising at least two principal plies of fibres embedded in a resin, the preferred direction of one of the plies of fibres at any point on the flap, called a fan-shaped ply, is determined using a method according to either one of Claims 4 and 5, such that the fibres form the stiffeners of the surface of the flap.
